# EUROPÄISCHE PATENTSCHRIFT

(11) **EP 2 851 301 B1**
(45) Veröffentlichungstag und Bekanntmachung des Hinweises auf die Patenterteilung: **02.09.2020**
(21) Anmeldenummer: 13004629.5
(22) Anmeldetag: 24.09.2013
(51) Int. Cl.: B64F 1/30

(54) **Fluggastbrücke oder -treppe**
Air passenger boarding bridge or escalator
Passerelle ou escalier d'embarquement

(43) Veröffentlichungstag der Anmeldung: 25.03.2015
(73) Patentinhaber: Hübner GmbH & Co. KG, 34123 Kassel (DE)
(72) Erfinder: Bachmann, Jens, 34576 Homberg (DE)
(74) Vertreter: Patentanwälte Walther Hinz Bayer PartGmbB

(56) Entgegenhaltungen:
- EP-A1- 0 205 314
- DE-A1- 2 817 739
- FR-A1- 2 407 089
- US-A- 3 703 737
- US-A1- 2002 116 771

## Beschreibung

Die Erfindung betrifft eine Fluggastbrücke oder -treppe mit an einem Kopfrahmen der Fluggastbrücke oder -treppe durch eine Befestigungseinrichtung angeordneten Balg.

Aus der DE 28 17 739 A1 ist ein Balg zur Verbindung zwischen zwei gelenkig miteinander verbundenen Fahrzeugen bekannt, wobei zur Verbindung des Balges mit den Wagenkästen der beiden gelenkig miteinander verbundenen Fahrzeugen an den Wagenkästen jeweilig Kopfrahmen zur Aufnahme von Verbindungsleisten vorgesehen sind. Die Verbindungsleisten besitzen eine kreisrunde Ausnehmung, in die ein Wulst einschiebbar ist. Der Wulst ist Bestandteil des Balges als Teil des Überganges zwischen den gelenkig miteinander verbundenen Fahrzeugteilen.

Fluggasttreppen oder Fluggastbrücken sind aus dem Stand der Technik hinreichend bekannt. Sowohl der Fluggasttreppe als auch der Fluggastbrücke ist gemein, dass diese an ihrem auf das Flugzeug zuweisenden stirnseitigen Ende einen Balg aufweisen, der derart ausgebildet ist, dass er den Abstand zwischen dem kopfseitigen Ende der Fluggastbrücke oder -treppe bis zur Außenhaut des Flugzeugs im Bereich des Flugzeugzustiegs überdeckt.

Aus der EP 0 205 314 A1 ist eine Fluggastbrücke mit einem an einem Kopfrahmen der Fluggastbrücke durch eine Befestigungseinrichtung angeordneten Balg bekannt, wobei zur Befestigung des Balges an der Stirnseite der Fluggastbrücke eine Leiste vorgesehen ist. Der Balg, der Bestandteil des Vordachs der Fluggastbrücke ist, weist mehrere Wellen auf, die durch Rippen miteinander verbunden sind.

Die Fluggastbrücke oder -treppe besitzt stirnseitig an ihrem freien Ende einen sogenannten Kopfrahmen. Der Faltenbalg weist an seinem der Fluggastbrücke oder -treppe zugewandten Ende einen Balgrahmen auf, wobei der Kopfrahmen mit dem Balgrahmen verbunden wird. Dies geschieht üblicherweise dadurch, dass zunächst der Balgrahmen mit dem Balg an dem Kopfrahmen fixiert wird, z. B. durch Schraubzwingen, dann entsprechende Bohrungen durch Kopfrahmen und Balgrahmen eingebracht werden, um dann mittels Nieten den Balgrahmen des Balges mit dem Kopfrahmen zu verbinden. Dies ist sehr aufwendig, insbesondere vor dem Hintergrund, dass an dem Balgrahmen bereits der gesamte Balg angelenkt ist. Das heißt, beim Bohren der Löcher und beim Einziehen der Nieten hat der Werker immer den Balg im Rücken.

Die der Erfindung zugrunde liegende Aufgabe besteht demzufolge darin, hier Abhilfe zu schaffen. Insbesondere besteht die Aufgabe darin eine Verbindung zwischen Balg und Fluggastbrücke oder Fluggasttreppe bereitzustellen, die einfach und preiswert herstellbar ist.

Zur Lösung der Aufgabe wird erfindungsgemäß vorgeschlagen, dass die Befestigungseinrichtung Mittel zur Bereitstellung einer zumindest in zwei Raumrichtungen wirkenden formschlüssigen Verbindung umfasst, wobei die formschlüssige Verbindung durch ein zumindest kraftschlüssiges Verbindungsglied fixierbar ist, wobei die Mittel zwei formschlüssig miteinander in Eingriff bringbare erste und zweite Verbindungselemente umfassen, wobei das eine erste Verbindungselement als ein im Querschnitt in etwa C-förmiges Profil ausgebildet ist, wobei das andere zweite Verbindungselement als Hakenglied ausgebildet ist, wobei das kraftschlüssige Verbindungsglied als eine aus einem Elastomer hergestellte Leiste ausgebildet ist, wobei das Hakenglied durch die Leiste an das C-förmige Profil angepresst wird.

Die Mittel umfassen zwei formschlüssig miteinander in Eingriff bringbare erste und zweite Verbindungselemente, wobei das erste Verbindungselement als ein im Querschnitt in etwa C-förmiges Profil ausgebildet ist, und das andere zweite Verbindungselement als Hakenglied. Unter einem Hakenglied wird hierbei ein solches verstanden, das in der Lage ist, das C-förmige Verbindungsglied über einen Großteil der Länge, oder zumindest einen Teil des C-förmigen Profils als Verbindungsglied zumindest partiell zu hintergreifen. Das insofern leistenförmig ausgebildete Hakenglied greift hierbei insbesondere in das C-förmige Profil mit Spiel ein. Zur Fixierung des Hakengliedes am C-förmigen Profil ist als kraftschlüssiges Verbindungselement eine aus einem Elastomer hergestellte Leiste vorgesehen, durch die das Hakenglied an das C-förmige Profil gepresst gehalten wird. Das heißt, dass durch die elastische Leiste, das mit Spiel in das C-förmige Profil eingreifende Hakenglied in seiner Lage fixiert wird. Die Leiste, die insbesondere als Kederprofil ausgebildet ist, kann sich insofern durch ein konisch zulaufendes Ende auszeichnen, um dieses Kederprofil in den Raum zwischen dem Hakenglied einerseits und dem C-förmigen Profil andererseits eintreiben zu können.

Durch die Kombination von einer kraftschlüssigen Verbindung mit einem Mittel zur Bereitstellung einer formschlüssigen Verbindung wird die Möglichkeit eröffnet nicht nur eine einfache und preiswerte Befestigungseinrichtung bereitzustellen, sondern darüber hinaus auch eine, die schnell montierbar ist und ohne Zerstörung der einzelnen Verbindungselemente lösbar ist. Der Einsatz einer solchen Befestigungseinrichtung hat insofern weitere Vorteile; diese bestehen insbesondere darin, dass zum Transport einer Fluggastbrücke oder -treppe Balg und Fluggastreppe bzw. Fluggastbrücke gesondert transportiert werden können, was den Transport erheblich erleichtert, da durch die erfindungsgemäße Befestigungseinrichtung eine Anbringung des Balges an der Fluggastbrücke oder -treppe vor Ort erfolgen kann. Darüber hinaus ist auch im Ersatzteilfall ein Austausch des Balges problemlos möglich. Das heißt, die Verbindung ist lösbar.

Vorteilhafte Merkmale und Ausgestaltungen der Erfindung ergeben sich aus den Unteransprüchen.

Um zu verhindern, dass sich die aus einem Elastomer hergestellte Leiste unbeabsichtigt aus ihrer Fixierstellung löst, ist vorgesehen, dass zumindest auf einer Längsseite die Leiste eine Nut aufweist, die dem formschlüssigen, partiellen Um- oder Hintergreifen des Hakengliedes und/oder eines Vorsprunges des C-förmigen Profils dient. Weist die Leiste insofern zumindest eine längs der Leiste verlaufende Nut auf, die in Eingriff entweder mit dem Hakenglied oder dem Vorsprung des C-förmigen Profils steht, dann stellt sich die Leiste aus einem Elastomer nicht mehr nur als ein Element dar, das in der Lage ist eine kraftschlüssige Verbindung bereitzustellen, sondern es zeichnet sich die Verbindung zwischen Leiste und Hakenglied und C-förmigen Profil auch durch formschlüssige Anteile aus. Eine solche Leiste, die aus einem Elastomer hergestellt ist, und die mittels Formschluss, aber auch gegebenenfalls kraftschlüssiger Anteile, das Hakenglied in Eingriff mit dem C-förmigen Profil hält, wird auch als Kederprofil bezeichnet.

Alternativ zu den vorbeschriebenen Ausführungsformen ist auch eine Ausführungsform denkbar, bei der ebenfalls ein C-förmiges Profil als erstes Verbindungselement vorgesehen ist, wobei das C-förmige Profil ein aus einem Elastomer hergestelltes, leistenartiges Hakenglied aufnimmt. Das leistenartige Hakenglied weist hierbei zwei Nuten auf, in die die jeweils aufeinander zuweisenden Vorsprünge des C-förmigen Profiles eingreifen. Um das aus einem Elastomer hergestellte Hakenglied in das C-förmige Profil eintreiben zu können, weist das Hakenglied im Bereich der beiden aufeinander zuweisenden Vorsprünge des C-förmigen Profils eine Ausnehmung auf, die der Aufnahme der Kederleiste dient. Das heißt, dass durch die Kederleiste, bestehend aus einem Elastomer, die Hakenleiste, die ebenfalls aus einem Elastomer besteht, in ihrer Position gehalten wird.

Eine andere, weitere Ausführungsform zeichnet sich dadurch aus, dass das C-förmige Profil im Einzelnen zwei Schenkel aufweist, die durch einen Steg miteinander verbunden sind, wobei durch die Schenkel das Hakenglied umgriffen wird. Das C-förmige Profil weist an seinem einen Ende einen Schenkel in Form eines Schuhs auf, wobei das Hakenglied im Bereich des Schuhs einen Fuß zeigt, der in dem als Schuh ausgebildeten Schenkel lagert. Der Schenkel besitzt einen Vorsprung, der sich in etwa parallel zu dem Fuß des Hakengliedes erstreckt. Zwischen dem Fuß des Hakengliedes und dem Vorsprung besteht ein Abstand, der der Aufnahme der Leiste, bestehend aus einem Elastomer, dient. Um zu verhindern, dass die Leiste, bestehend aus einem Elastomer, aus dem Schuh gelangt, weist das Hakenglied im Bereich des Fußes einen Überstand auf.

Des Weiteren ist im Einzelnen vorgesehen, dass das erste Verbindungselement, insbesondere das C-förmige Profil am Kopfrahmen der Fluggastbrücke oder Fluggasttreppe fixiert ist, z. B. verschraubt ist. Um zu verhindern, dass Feuchtigkeit zwischen dem ersten Verbindungselement einerseits und dem Kopfrahmen andererseits in das Innere der Fluggastbrücke oder -treppe gelangt, ist vorteilhaft das erste Verbindungselement gegenüber dem Kopfrahmen abgedichtet, beispielsweise durch Silikon.

Für die Verbindung des Hakengliedes mit dem Balg sind die unterschiedlichsten Verbindungsarten bekannt, z. B. Klemmen, Kleben, Schrauben usw.

Um Gewicht zu sparen, ist das C-förmige Profil vorteilhaft aus Aluminium hergestellt, wie dies auch in gleicher Weise für das Hakenglied bei verschiedenen Varianten der Fall ist.

Anhand der Zeichnungen wird die Erfindung nachstehend beispielhaft näher erläutert.
- Fig. 1: zeigt eine erste Ausführungsform der Befestigungseinrichtung;
- Fig. 2: zeigt eine zweite Ausführungsform der Befestigungseinrichtung;
- Fig. 3: zeigt eine dritte Ausführungsform der Befestigungseinrichtung, wobei hier das Hakenglied aus einem Elastomer ausgebildet ist;
- Fig. 4: zeigt eine vierte Ausführungsform der Befestigungseinrichtung.

Die Fluggastbrücke oder -treppe ist schematisch angedeutet und mit 1 bezeichnet. Die Fluggastbrücke oder -treppe 1 weist einen Kopfrahmen 3 auf, der stirnseitig an der Fluggastbrücke oder -treppe 1 U-förmig umlaufend angeordnet ist. Ebenfalls U-förmig umlaufend an dem Kopfrahmen 3 angeordnet ist das C-förmige Profil 7, 70, das insbesondere mit dem Kopfrahmen 3 verschraubt ist. Zwischen dem C-förmigen Profil 7, 70 und dem Kopfrahmen 3 befindet sich eine Dichtungsmasse, beispielsweise aus Silikon, um ein Eindringen von Feuchtigkeit in das Innere der Fluggastbrücke oder -treppe zu verhindern.

Das C-förmige Profil 7, 70 weist einen Steg 8; 80 auf, der der Schraubverbindung mit dem Kopfrahmen 3 dient. Der Steg 8; 80 zeigt zu beiden Enden U-förmig angeordnet zwei Schenkel 9; 90, 91, wobei die beiden Schenkel aufeinander zuweisende erste und zweite Vorsprünge 10, 11; 100, 111 besitzen. Insofern ergibt sich ein im Querschnitt C-förmiges Profil.

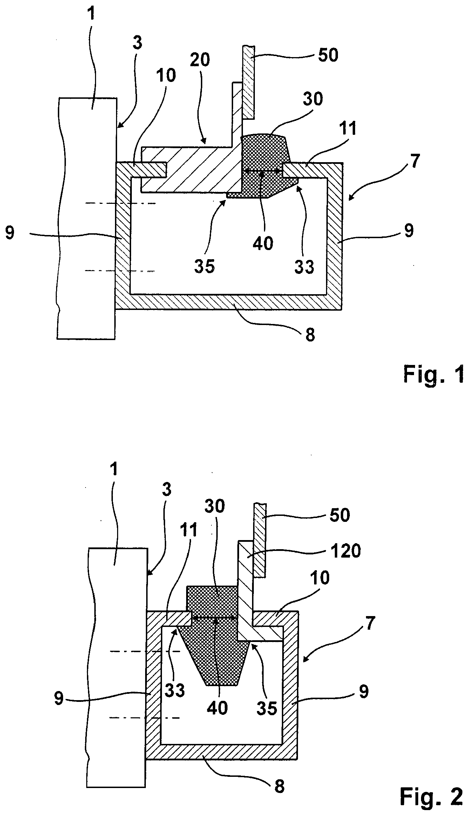

Das in Fig. 1 mit 20 bezeichnete Hakenglied weist zur Aufnahme durch das C-förmige Profil 7 eine U-förmig ausgebildete Kralle 22 auf, wobei die Kralle 22 dem Einhängen des leistenförmigen Hakengliedes 20 an dem ersten Vorsprung 10 des C-förmigen Profiles 7 dient. Um nun dieses Hakenglied 20 mit der Kralle 22 in der Position wie in der Fig. dargestellt zu fixieren, ist die Leiste 30 aus einem Elastomer vorgesehen, die auch als Keder bezeichnet werden kann. Der Keder oder Leiste 30 weist zu einer Seite seiner Längskante eine Nut 33 auf, durch die der zweite Vorsprung 11 des C-förmigen Profils 7 erfasst wird. Um ein unbeabsichtigtes Herausrutschen der Leiste 30 sicher zu verhindern, ist die Nase 35 vorgesehen, die das Hakenglied 20 hintergreift.

Erkennbar ist hierbei, dass das Hakenglied 20 formschlüssig in zwei Raumrichtungen X und Y durch das C-förmige Profil 7 aufgenommen wird. Das Hakenglied 20 liegt zunächst mit Spiel in dem C-förmigen Profil 7 ein, wobei das Spiel durch einen Freiraum 40 zwischen dem Hakenglied 20 und dem freien Ende des zweiten Vorsprungs 11 definiert wird. In diesem Freiraum 40 wird die Leiste 30 eingetrieben, wodurch schlussendlich das Hakenglied 20 in der Position, wie sie in Fig. 1 dargestellt ist, gehalten wird.

Die Ausführungsform gemäß Fig. 2 unterscheidet sich von der gemäß Fig. 1 darin, dass das leistenförmige Hakenglied 120 lediglich L-förmig ausgebildet ist, und keine U-förmige Kralle aufweist, wie das Hakenglied 20. Auch bei der Ausführungsform gemäß Fig. 2 wird durch die Leiste 30 das Hakenglied 120 in seiner Position gehalten. Auch hier zeigt weiterhin die Leiste 30 eine Nut 33 zur Aufnahme durch den zweiten Vorsprung 11 des C-förmigen Profiles 7.

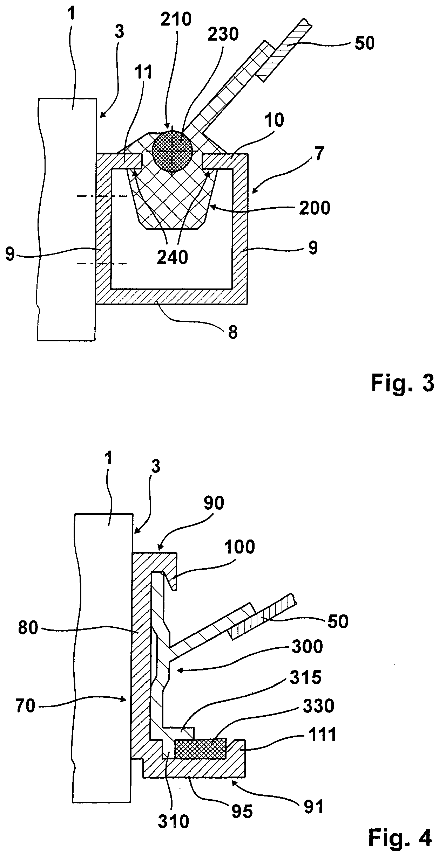

Die Ausführungsform gemäß Fig. 3 zeigt ein C-förmiges Profil 7, das in gleicher Weise ausgebildet ist, wie dies gemäß der Fig. 2. Das C-förmige Profil 7 nimmt hier allerdings ein leistenförmiges Hakenglied 200 auf, wobei das Hakenglied 200 aus einem Elastomer ausgebildet ist. Das Hakenglied 200 besitzt zur Aufnahme der beiden aufeinander zuweisenden Vorsprünge 10 und 11 des C-förmigen Profiles 7 zwei Nuten 240, in die die Vorsprünge 10, 11 des C-förmigen Profiles eingreifen, wie sich dies unmittelbar aus Fig. 3 ergibt. Im Bereich der beiden Nuten 240 befindet sich eine Aussparung 210, die der Aufnahme der Leiste 230 aus einem Elastomermaterial dient. Das heißt, die Leiste 230 bildet im Prinzip eine Kederleiste.

Bei der Ausführungsform gemäß Fig. 4 zeigt das C-förmige Profil 70 zwei Schenkel 90, 91, verbunden durch den Steg 80, die jeweils endseitig aufeinander zuweisende Vorsprünge 100, 111 besitzen. Der Schenkel 91 ist hierbei nach Art eines Schuhs 95 ausgebildet. Das mit 300 bezeichnete leistenförmige Hakenglied weist im Bereich des Schuhs 95 einen Fuß 310 auf, der zu dem Vorsprung 111 des Schuhs 95 beabstandet ist. In den durch den Abstand gebildeten Raum wird die aus einem Elastomer hergestellte Leiste 330 eingelegt, wobei, um zu verhindern, dass die Leiste 330 bei Belastung aus dem Schuh 95 herausgelangt, das Hakenglied 300 im Bereich des Fußes 310 einen Überstand 315 aufweist.

Das Hakenglied 20, 120, 200, 300 zeigt darüber hinaus an dem freien Ende den Balg 50.

### Bezugszeichenliste:

- 1: Fluggastbrücke oder -treppe
- 3: Kopfrahmen
- 7: C-förmiges Profil
- 8: Steg
- 9: Schenkel
- 10: erster Vorsprung
- 11: zweiter Vorsprung
- 20: Hakenglied
- 22: Kralle
- 30: Leiste (aus Elastomer)
- 33: Nut
- 35: Nase
- 40: Freiraum zwischen zweitem Vorsprung und Hakenglied
- 50: Balg
- 70: C-förmiges Profil
- 80: Steg
- 90: Schenkel
- 91: Schenkel
- 95: Schuh
- 100: erster Vorsprung
- 111: zweiter Vorsprung
- 120: Hakenglied
- 200: Hakenglied (aus Elastomer)
- 210: Aussparung im Hakenglied
- 230: Leiste (aus Elastomer)
- 240: Nuten
- 300: Hakenglied
- 310: Fuß
- 315: Überstand
- 330: Leiste (aus Elastomer)

## Patentansprüche

1. Fluggastbrücke oder -treppe (1) mit an einem Kopfrahmen (3) der Fluggastbrücke oder -treppe (1) durch eine Befestigungseinrichtung angeordneten Balg (50),
wobei die Befestigungseinrichtung Mittel zur Bereitstellung einer zumindest in zwei Raumrichtungen wirkenden formschlüssigen Verbindung umfasst,
wobei die Mittel zwei formschlüssig miteinander in Eingriff bringbare Verbindungselemente umfassen,
wobei das erste Verbindungselement als ein im Querschnitt in etwa C-förmiges Profil (7; 70) ausgebildet ist,
wobei das zweite Verbindungselement (11) als Hakenglied (20; 120; 200; 300) ausgebildet ist,
wobei die formschlüssige Verbindung durch ein zumindest kraftschlüssiges Verbindungsglied fixierbar ist, wobei das kraftschlüssige Verbindungsglied als eine aus einem Elastomer hergestellte Leiste (30; 230; 330) ausgebildet ist, wobei das Hakenglied (20, 200, 300) durch die Leiste an das C-förmige Profil (7, 70) angepresst wird.

2. Fluggastbrücke oder -treppe (1) nach Anspruch 1,
**dadurch gekennzeichnet,**
**dass** die Leiste (30) zumindest an einer Längsseite eine Nut (33) aufweist.

3. Fluggastbrücke oder -treppe (1) nach einem der voranstehenden Ansprüche,
**dadurch gekennzeichnet,**
**dass** das Hakenglied (200) aus einem Elastomer ausgebildet ist.

4. Fluggastbrücke oder -treppe (1) nach Anspruch 3,
**dadurch gekennzeichnet,**
**dass** das Hakenglied (200) im Bereich der aufeinander zuweisenden Vorsprünge (10, 11) des C-förmigen Profils (7) eine Aussparung (210) zur Aufnahme einer Leiste (230) aus einem Elastomer aufweist.

5. Fluggastbrücke oder -treppe (1) nach einem der voranstehenden Ansprüche,
**dadurch gekennzeichnet,**
**dass** das C-förmige Profil (70) zwei Schenkel (90, 91) aufweist, die durch einen Steg (80) verbunden sind, wobei der eine Schenkel (91) nach Art eines Schuhs (95) ausgebildet ist, wobei das Hakenglied (300) zur Aufnahme durch den Schuh (95) einen Fuß (310) aufweist, wobei der Schuh (95) einen Vorsprung (111) aufweist, wobei zwischen Fuß (310) und Vorsprung (111) die Leiste (330) aus einem Elastomer einliegt.

6. Fluggastbrücke oder -treppe (1) nach Anspruch 5,
**dadurch gekennzeichnet,**
**dass** das Hakenglied (300) im Bereich des Fußes (310) einen Überstand (315) zur Fixierung der Leiste (330) aufweist.

7. Fluggastbrücke oder -treppe (1) nach einem der voranstehenden Ansprüche,
**dadurch gekennzeichnet,**
**dass** die Leiste (30; 230; 330) als Kederprofil ausgebildet ist.

8. Fluggastbrücke oder -treppe (1) nach einem der voranstehenden Ansprüche,
**dadurch gekennzeichnet,**
**dass** das erste Verbindungselement am Kopfrahmen (3) der Fluggastbrücke oder -treppe (1) fixiert, z. B. verschraubt ist.

9. Fluggastbrücke oder -treppe (1) nach einem der voranstehenden Ansprüche,
**dadurch gekennzeichnet,**
**dass** das erste Verbindungselement gegenüber dem Kopfrahmen (3) abgedichtet ist.

## Claims

1. An air passenger boarding bridge or stairs (1) with a bellows (50) arranged on a head frame (3) of the air passenger boarding bridge or stairs (1) by a fastening device,
wherein the fastening device comprises means for providing a positive connection acting at least in two directions in space, wherein the means comprise two connecting elements, which can be engaged with each other by a positive connection,
wherein the first connecting element is formed as an approximately C-shaped profile (7; 70) in cross-section,
wherein the second connecting element (11) is formed as a hook member (20; 120; 200; 300),
wherein the positive connection can be fixed by at least a non-positive connecting member, wherein the non-positive connecting member is formed as a strip (30; 230; 330) made from an elastomer, wherein the hook member (20, 200, 300) is pressed onto the C-shaped profile (7, 70) by the strip.

2. The air passenger boarding bridge or stairs (1) according to claim 1,
**characterised in**
**that** the strip (30) comprises a groove (33) at least on a longitudinal side.

3. The air passenger boarding bridge or stairs (1) according to any one of the preceding claims,
**characterised in**
**that** the hook member (200) is formed of an elastomer.

4. The air passenger boarding bridge or stairs (1) according to claim 3,
**characterised in**
**that** the hook member (200) in the area of the protrusions (10, 11) of the C-shaped profile (7) pointing towards each other comprises a recess (210) for receiving a strip (230) made of an elastomer.

5. The air passenger boarding bridge or stairs (1) according to any one of the preceding claims,
**characterised in**
**that** the C-shaped profile (70) comprises two legs (90, 91), which are connected by a bar (80), wherein the one leg (91) is formed in the manner of a shoe (95), wherein the hook member (300) comprises a foot (310) for receiving the shoe (95), wherein the shoe (95) comprises
a protrusion (111), wherein the strip (330) made from an elastomer is inserted between foot (310) and protrusion (111).

6. The air passenger boarding bridge or stairs (1) according to claim 5,
**characterised in**
**that** the hook member (300) comprises a projection (315) for fixing the strip (330) in the area of the foot (310).

7. The air passenger boarding bridge or stairs (1) according to any one of the preceding claims,
**characterised in**
**that** the strip (30; 230; 330) is formed as a keder profile.

8. The air passenger boarding bridge or stairs (1) according to any one of the preceding claims,
**characterised in**
**that** the first connecting element is fixed, for example, screwed, on the head frame (3) of the air passenger boarding bridge or stairs (1).

9. The air passenger boarding bridge or stairs (1) according to any one of the preceding claims,
**characterised in**
**that** the first connecting element is sealed off against the head frame (3).

## Revendications

1. Passerelle ou escalier d'embarquement (1) avec un soufflet (50) agencé à un cadre de tête (3) de la passerelle ou de l'escalier d'embarquement (1) par un dispositif de fixation,
dans laquelle le dispositif de fixation comporte des moyens pour fournir une liaison à engagement positif agissant au moins dans deux directions dans l'espace,
dans laquelle les moyens comportent deux éléments de liaison qui peuvent être venir en prise l'un avec l'autre à engagement positif, dans lesquels le premier élément de liaison est formé comme profil (7; 70) environ en forme de 'C' en section transversale,
dans lequel le second élément de liaison (11) est formé comme élément de crochet (20; 120; 200; 300),
dans lequel la liaison à engagement positif est fixable par au moins un élément de liaison non positif, dans lequel l'élément de liaison non positif est formé par une baguette (30; 230; 330) fabriquée à partir d'un élastomère, dans lequel l'élément de crochet (20, 200, 300) est pressé contre le profil (7, 70) en forme de 'C' par la baguette.

2. Passerelle ou escalier d'embarquement (1) selon la revendication 1,
**caractérisé en ce**
**que** la baguette (30) au moins sur un côté longitudinal comporte une rainure (33).

3. Passerelle ou escalier d'embarquement (1) selon l'une quelconque des revendications précédentes,
**caractérisé en ce**
**que** l'élément de crochet (200) est fabriqué à partir d'un élastomère.

4. Passerelle ou escalier d'embarquement (1) selon la revendication 3,
**caractérisé en ce**
**que** l'élément de crochet (200) dans la région des protubérances (10, 11) se faisant face du profil (7) en forme de 'C' comporte un évidement
(210) pour recevoir une baguette (230) fabriqué à partir d'un élastomère.

5. Passerelle ou escalier d'embarquement (1) selon l'une quelconque des revendications précédentes,
**caractérisé en ce**
**que** le profil (70) en forme de 'C' comporte deux branches (90, 91) qui sont liées par une barre (80), dans lequel l'une des branches (91) est formée à la manière d'une chaussure (95), dans laquelle l'élément de crochet (300) comporte un pied (310) pour recevoir la chaussure (95) comporte, dans laquelle la chaussure (95) comporte une protubérance (111), dans laquelle la baguette (330) fabriquée à partir d'un élastomère est insérée entre le pied (310) et la protubérance (111).

6. Passerelle ou escalier d'embarquement (1) selon la revendication 5,
**caractérisé en ce**
**que** l'élément de crochet (300) comporte une saillie (315) dans la région du pied (310) pour fixer la baguette (330).

7. Passerelle ou escalier d'embarquement (1) selon l'une quelconque des revendications précédentes,
**caractérisé en ce**
**que** la baguette (30; 230; 330) est formée comme profilé en bourrelet.

8. Passerelle ou escalier d'embarquement (1) selon l'une quelconque des revendications précédentes
**caractérisé en ce**
**que** le premier élément de liaison est fixé, par exemple vissé, au cadre de tête (3) de la passerelle ou de l'escalier d'embarquement (1) .

9. Passerelle ou escalier d'embarquement (1) selon l'une quelconque des revendications précédentes,
**caractérisé en ce**
**que** le premier élément de liaison est rendu étanche contre le cadre de tête (3).
